# EUROPEAN PATENT SPECIFICATION

(11) **EP 2 599 260 B1**
(45) Date of publication and mention of the grant of the patent: **04.06.2014**
(21) Application number: 11863065.6
(22) Date of filing: 04.04.2011
(51) Int. Cl.: H04M 7/00, H04M 3/42, H04L 29/08

(54) **APPLICATION SERVER FOR PROVISIONING A CONTROLLED COMMUNICATIONS SYSTEM IN A CLOUD-BASED ENVIRONMENT**
ANWENDUNGSSERVER ZUR BEREITSTELLUNG EINES GESTEUERTEN KOMMUNIKATIONSSYSTEMS IN EINER CLOUD-UMGEBUNG
SERVEUR D'APPLICATIONS POUR APPROVISIONNER UN SYSTÈME DE COMMUNICATIONS CONTRÔLÉES DANS UN ENVIRONNEMENT D'INFORMATIQUE EN NUAGE

(43) Date of publication of application: 05.06.2013
(73) Proprietor: Mitel Networks Corporation, Ottawa, ON K2K 2W7 (CA)
(72) Inventor: WINTER, Michael, Ottawa Ontario K1N 5K7 (CA); BUTLER, Jon, Kanata Ontario K2W 1A5 (CA); RAHIMI, Reza, Ottawa Ontario K1S 2B7 (CA); REDDIN, Stephen, Ottawa Ontario K1N 5K7 (CA)
(74) Representative: Derry, Paul Stefan
(86) International application number: PCT/CA2011/000359
(87) International publication number: WO 2012/135931

(56) References cited:
- EP-A2- 1 091 547
- WO-A1-01/76205
- WO-A1-02/21263
- WO-A2-2011/056386
- US-A1- 2002 149 978
- US-A1- 2003 195 934
- US-A1- 2005 174 990
- US-A1- 2007 211 878
- US-A1- 2010 122 198
- US-A1- 2011 026 517
- US-B2- 7 280 530

## Description

### Field of the Invention

This invention relates generally to cloud-based computing, and in particular to an application server for provisioning a controlled communications system, such as a virtual PBX in a cloud-based environment.

### Background of the Invention

In cloud-based computing customers do not own the physical infrastructure, but instead avoid capital expenditure by "renting" usage from a third-party service provider. Cloud-based services are services that reside in the cloud that a user can subscribe to. There are various applications that are provided, one of them being Communications.

Cloud-based communications (also known as Communications as a Service (CaaS)), is a hosted solution provided and managed as a service. This is a similar concept to Centrex, which is a centralized PBX (Private Branch Exchange), where the hosting company provides the hardware and connects to the customer through dedicated lines. In a cloud-based solution, the enterprise customer accesses the communication service through the Internet or an IP managed network service. The enterprise does not buy server hardware or software, but does buy phones that connect through the Internet to the service, and must maintain their own Internet access and hardware.

The communications services are delivered as a common set of features and functions. The enterprise subscribes to the features and functions desired. The financial arrangements for access can be by the seat, phone, feature, usage, or unlimited usage with flat fee. A major benefit of such systems is a reduced, controlled and predictable cost. Because the cloud site is shared with many other subscribers, the overall hardware, software and operations costs can be prorated over the subscribing organizations. The enterprise benefits from the service provider's economy of scale, which translates into lower cost service. Other advantages include:
- Flexible sizing--The cloud solution can expand or reduce the number of seats/phones/endpoints very quickly. This is especially useful when the number of active seats varies by season or for special events or situations.
- Business continuity/reliability-The cost of high availability (99.999%) may be beyond most budgets. Ensuring continued operation or rapid recovery when a disaster occurs can prove more affordable with a cloud solution than if the enterprise tried to deliver the same level of business continuity itself.
- Staffing-The enterprise ICT staff responsibilities are significantly less with a cloud solution. The ICT staff can be smaller and will not require expensive certification training. The ICT function is mostly administration of the service.
- Software--The enterprise does not have to deal with software subscription fees and licensing costs. These are included in the service subscription fee.
- Management-The enterprise should not have to allocate significant time to managing a cloud solution. Management will deal primarily with a contract that has specific deliverables and SLAs.
- Features and functions--The enterprise can gain access to features and functions that are not available on their existing system/service or that are too expensive to implement. Features and functions can be tailored to individual users, thereby avoiding a one-size-fits-all solution.

Many problems arise for the service providers as a result of telephony moving from the company premises to the cloud. Service Providers are faced with having to cost-effectively manage large numbers of customers and end users. Enterprises need to have similar control over the system as they did when it was on premise. The Service Provider must provide central management with dispersed control. The end user needs to be able to access the system even though it is off-site. All customer support has to be performed through a call center, incurring significant costs as customers grow and change; each customer may require hundreds of data modifications per year.

Maintaining customer records for billing purposes is a considerable problem, with isolated systems that do not communicate with each other or upload information to a common application. This is a handicap to customer self service as there is no way to determine when phone users are created or deleted, determine when their subscription is modified, or provide that information to a billing system.

Another problem service provider's face is, in the case of a large customer, the aggregation of many instances of a particular PBX solution into one, and making the customer unaware that there is more than one. The opposite situation is having many small customers using one instance of a PBX.

The provisioning of a PBX is a very time consuming practice, with many different forms having to be filled out in the correct order. Multiply this by many customers, either using multiple instances of a PBX, or many customers utilizing the same PBX, the organization of the data and the keeping track of which resources belong to which customer can become problematic quickly. As well, Service Providers may want to let Resellers do all or part of the management for a certain set of companies, so there can be another.layer of complexity for managing these Resellers as well.

Packaging of features into comprehensive, and easily deployable and maintainable bundles to the customer is also a problem.

Service Providers have the ability to monitor at will, lawfully or unlawfully, the communication and data stored between the user and the host company. This creates a problem surrounding the external management of security-based services.

Since the service is based in the cloud, there will be some delay when features or functions are accessed.

Another problem is how well the service operates and supports user productivity. The features offered should require little training and be intuitive in their operation. The more difficult to learn and use the service, the less productive the user.

There are many diverse applications that a customer might want to subscribe to, therefore linking these various applications so that provisioning is done from one place is another problem.

Reference is made to document EP 1 091 547.

### Summary of the Invention

Embodiments of the invention package diverse forms that would normally require expert intervention at the service provider level and present them to the client in a common user-friendly interface that allows the user to configure directly the communications system without an intimate knowledge of the programming language for the system and without having to take into account the impact of desired changes on the overall system configuration.

According to a first aspect of the invention there is provided an application server for provisioning one or more controlled communication systems hosted on a server in a network environment through a portal application as claimed in claim 1.

The invention will be particularly described in the context of a virtual PBX, but the invention is also applicable to other forms of controlled communication system, such as a Voicemail server, an Audio Conferencing System, a Video Conferencing System, a Mobile Unified Communication System, and a PBX, referred to in the present application generally as a controlled communication system.

The profile is related to a single user, but it may also relate to a common room that is provisioned as a user such as would be found in a conference room environment. This is referred to herein as a "room profile".

According to a second aspect of the invention there is provided a computer-implemented method of provisioning one or more controlled communications systems hosted on an application server in a network environment through a portal application as claimed in claim 14.

The invention may be implemented as a computer program running on a suitable processor or processors, in which case the invention extends to a storage medium containing instructions to implement the invention. The modules may be distinct software or hardware modules, or integrated into common entities providing the necessary functionality. It will also be appreciated that the application server can be provided by a single application server or a network of individual servers, possibly geographically dispersed.

Embodiments of the invention provide a portal, which is a management and customer self-service application that provides scalable administration capabilities over many PBX instances and customer sites for service provider users and easy configuration and control of the phone system for the enterprise customers. For service providers who want to offer hosted voice service with PBX's, the portal delivers cost savings by automating the provisioning process, simplifying management and providing customers with easy to use interfaces for self-service and feature control.

The portal may be hosted centrally in the data center and provide configuration access to the PBX instances through a web interface accessible with standard browsers. It facilitates easy service delivery by enabling customer control through an intuitive interface while maintaining the global control over managing the aggregated PBX instances with the service provider. Flexible feature allocation enables service providers to create bundles that allow the customer to easily manage their service usage as well as presenting the potential for the service provider to up sell customers on advanced features.

The portal delivers important functionality to service providers by enabling them to cost effectively offer hosted voice from a datacenter with PBXs. Embodiments of the invention deliver value in four areas:
1. Provisioning: Service providers can effectively manage large numbers of PBXs and provision resellers, customer sites and end users.
2. Management: Service providers are able to easily view the PBXs assigned to various resellers or customers and modify any required settings. Customizable role based profiles enable service providers to define the scope and span of features their users can access.
3. Self Service: Customers or Resellers can access their instance of a PBX for creating, modifying and deleting users. Customers are able to easily access and modify frequently used features such as call groups and profiles.
4. Billing Output: Information on bundles assigned to customers can be imported to service provider billing applications, ensuring that customer records are always accurate.

The core module of the portal delivers service providers simplified management of large PBX deployments. Through a hierarchy of customizable role based profiles, the service provider can define the features their users are able to access and ensure that they are presented with an intuitive interface for PBX controls.

The portal enables the creation of customized Operations Profiles for access to service provider management features. The profiles ensure users have access to the features required for their role in the organization.

The core module features are designed to provide flexible management so that service providers can create their own service definitions and efficiently deliver hosted voice services to enterprise customers.

Control of customers in multi-site deployment of PBX s is centralized to a single view from which the service provider is able to create customers and resellers and manage existing sites. This provides a view of the critical customer/reseller information required by a service representative or a sales user deploying service to a new site. In new deployments this enables the assignment of PBX instances and allocation of a bundle cap for the site.

Enterprise users may be created as either administrators or end users. The administrators are enabled with access and control of all users in the company, providing the ability to self-service for creation, deletion and editing.

Enterprise control and bundling provides end users with access to the operations they require. This enables efficient use of licenses and provides end users with access to modify their features and profile information through standard web browsers.

User management features provide control and configuration for adding, modifying and removing customer users. This feature will allow enterprises or resellers on behalf of the enterprise to setup new employees with their phone features and their portal account. The user's information can be edited by the customer administrator or through self-service by the end user.

The solution is targeted at service providers to help them solve the problems mentioned above.

Embodiments of the invention thus deliver a highly scalable and dense communication services platform, the control and flexibility needed to distribute cost-effective communication services from a data center with integration into billing and operations systems, and service delivery to small and medium-sized businesses through a direct or indirect sales channel.

Installation costs may be kept low through a simple license model that only requires service providers to purchase licenses for the number of extensions under management, tying increases in license purchases to increases in service provider revenue.

By providing intuitive and easy to use self-service, customer churn is reduced and satisfaction increased.

Embodiments of the invention also allow for a customer to have geographically dispersed users, which can take into account the time zone they are in. This is especially crucial for emergency services, so that the correct location is given when an emergency call is made.

It also includes things like making sure the time shown on the phone is right, or alarm features that are set use local time for the user, not the PBX time.

Embodiments of the invention capture information from the individual PBXs and aggregates it into a single point of access for the service provider, reseller, and customer.

Automating what was previously a multi-step and time-consuming process simplifies service delivery and enables service providers to easily deploy more resources as their customer base scales. This includes mass creation and configuration of users for a customer.

All information on new users or modifications to service may be stored and can be easily viewed or connected to a billing system.

Service providers can define unique profiles for customer's users, limiting access to sensitive information, and providing flexibility for what features are grouped together and sold to customers. How this is done also provides for a more secure system. These are known as bundles. Bundles also define the role a particular user has. This allows service provider customers to access and control their own communications services. End users are provided easy access to phone programming, unlocking the rich phone features and information previously trapped in the phone set that could only be accessed through the keypad. As well, instead of having to call the service provider every time a new user is added or service is modified, the customer is able to login securely and make all the necessary modifications. This results in:
- reduced service costs to the service provider through elimination of technician visits
- simple and instant service modifications for the customer
- complete visibility and increased customer control of the company directory, call groups, and routing selection (which also increases security)

Roles created within the application can be contextual, based on when a role logs in, where they log in, what they log in on, who is logging in and why they are logging in.

By providing customers and resellers with an intuitive user interface for modifying service options and user details, significant cost savings are realized by reducing load on customer support centers at the service provider. Because the programming of a new customer is simplified, the need for the service provider to employ highly skilled PBX configuration managers is kept to a minimum.

Embodiments of the invention also allow for service providers to "push" advertisements to all their customers or resellers, and users of the PBX (based on the "role" of the person using the application, or their usage patterns, such as long distance calling, or type of cell phone they bought) that could include new savings, new offerings, new phones, improvement to services, etc.

This is all done with minimal hardware cost to the customer, since the application is capable of running on a very low cost PC. The application can also be set (for security reasons), so that only a particular piece of hardware can be used to log into the system.

The portal application is also scalable and redundant. Each customer can be 'virtualized', so that different versions of the application can be sold, upgraded to, etc.

### Brief Description of the Drawings ,

The invention will now be described in more detail, by way of example only, with reference to the accompanying drawings, in which:-
Figure 1 is a high level block diagram of a cloud-computing based PBX service with a portal application in accordance with one embodiment of the invention;
Figure 2 is a block diagram illustrating the virtual PBX service emphasizing the portal application in more detail;
Figure 3 is a block diagram illustrating the portal application;
Figure 4 is a block diagram illustrating components of the portal application in more detail; and
Figure 5 is a flow chart of one exemplary implementation of the invention.

### Detailed Description of the Invention

As noted, while the invention is generally application to controlled communication systems operating in cloud-based environments, the invention will be described in detail in association with a virtual PBX, which provides a centrally hosted PBX solution to remote clients.

In the described embodiment, the portal is a Java web application running on a JBoss application server on a hardware or virtual machine in the data center that is accessible from a standard web browser, such as Microsoft's Internet Explorer or Firefox. The portal application communicates to the PBX instances through a proprietary protocol.

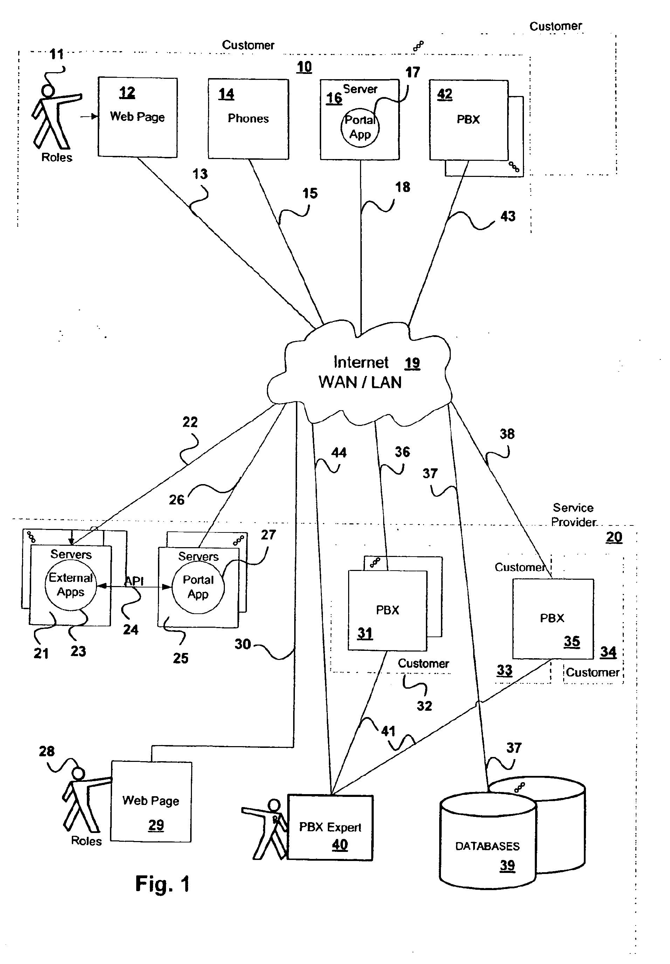

Referring to Figure 1, the Service Provider 20 has a plurality of PBX's (either hardware or instances of software running on one or more servers) 31, 35, 42 which can reside in the Service Provider or at the Customers site. These are connected in a standard way, 43, 36, 38 to the LAN/WAN 19. A suitable PBX solution that fits into this environment is the Mitel® Communications Director (MCD) call control software from Mitel Corporation described in Mitel document ID 32750.

A single PBX 35 can be allocated to many customers 33, 34, or one customer 32 can use many PBX's 31. Servers 25 are connected to the LAN/WAN 19 in a standard way 26 running Portal Apps 27 (not necessarily one app per server). Databases 39 that contain data for the Portal App are connected in a standard way 37 to the LAN/WAN 19. The reason for the multiple Portal Apps and Databases is so that there can be a virtual app and virtual database per customer so that they can be individually upgraded.

Also connected to the LAN/WAN 19 are External Applications 23, running on Servers 21 connected to the LAN/WAN in a standard way 22 that can, through an API 24, access information (for example a billing number, or customer name) from the Portal App 27 stored in a Database 39. The external applications could also be external (Client Relationship Management) CRM applications and external provisioning applications

Within the Service provider, there exists one or more PBX "experts" 40 connected to the PBX's 31, 35, 42 in either a proprietary way (as defined by the PBX) 41, or via the LAN/WAN 19 via a standard way 44, which are people knowledgeable in the provisioning of the PBX(s) 31, 35, 42. Their responsibilities include:
- in conjunction with business input, defining the service definitions (bundles) that will be provided to the customer
- configuring the default database and PBX environment to provide the services
- applying the default database to the PBX(s)

As well, there are other Roles or Operation Profiles 28 within the Service Provider 20 which have different levels of access to the Portal App that can see and/or modify the data for a customer using Web Pages 29 connected in a standard way 30 to the LAN/WAN 19.

Customers 10 of the Service Provider are connected via the WAN 19. They have geographically dispersed phones 14 connected through the WAN 19 using VOIP 15 to the PBX(s) 31, 35, 42 associated with the customer 10, 32, 33, 34. Roles 11 can be defined in the Portal App 27 that are specific for the particular customer to allow them to see/modify various parts of their particular system through Web Pages 12 connected to the LAN/WAN 19 in a standard way 13. They can also house a Portal App 17 running on a Server 16, connected to the WAN/LAN in a standard way 18 in offline mode, which can store any changes that the customer makes (if the WAN 19 is inaccessible for a period of time), which can synch up to the main App/Database 27, 39 when the connection is reestablished.

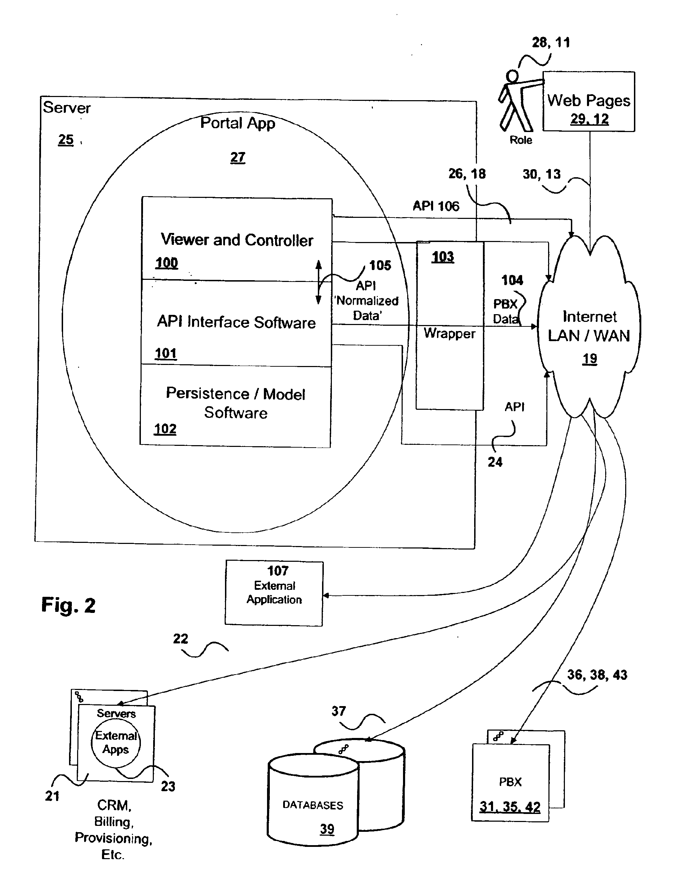

Referring to Figure 2, the Portal App 27 running on an application server 25 is broken into three major software components: the Viewer and Controller 100, the API/Interface Software 101, and the Persistence/Model Software 102.

The Viewer and Controller module 100 is responsible for presenting the web pages 29, 12 corresponding to the Role 28, 11 that is accessing the Portal App 27.

The viewer and controller module 100 may also package communications system forms together such that a high level services room/user creation form or API is presented. The high level services may include naming and packaging Classes of Service, and naming and packaging Classes of Restriction.

The communications system forms may be, for example, a number of extension creation forms, a form for grouping all user/room extensions together to create a twinning ring group, a form for configuring voicemail for the user/room, and a form for setting up routing of the extensions to voicemail, a form for setting up routing of a user belonging to a specific company to voicemail, a form for setting up routing of a user belonging to a specific company to voicemail based on a unique pre-pending id to the user's extensions, a form for configuring Class of Restriction, and a form for configuring Class of Service.

The viewer and controller module 100 is also responsible for presenting an API 106 to an External application 107 that allows this application to program the system.

The API/Interface Software 101 is responsible for presenting and controlling the API 24 that is given to external application 23 (for example CRM, Billing, Provisioning, etc.) that allows them to extract information from the Databases 39 specific to a particular Customer (10, 32, 33, 34 from Figure 1). This Software 101 is also responsible for reading and writing PBX Data 104 to and from the PBX's 31, 35, 42. There is "wrapper" software 103, which hides the various different PBX implementations from the API/Interface Software 101. The API/Interface Software 101 also holds the business logic which the Web Page Viewer and Controller 100 accesses through an API 105 in order to display the web pages properly. The API/Interface Software 101 is also responsible for interfacing to the Database(s) 39.

The Database(s) 39 holds Customer information, Call Control information, and Bundle information. They are redundant, and provide Customer virtualization.

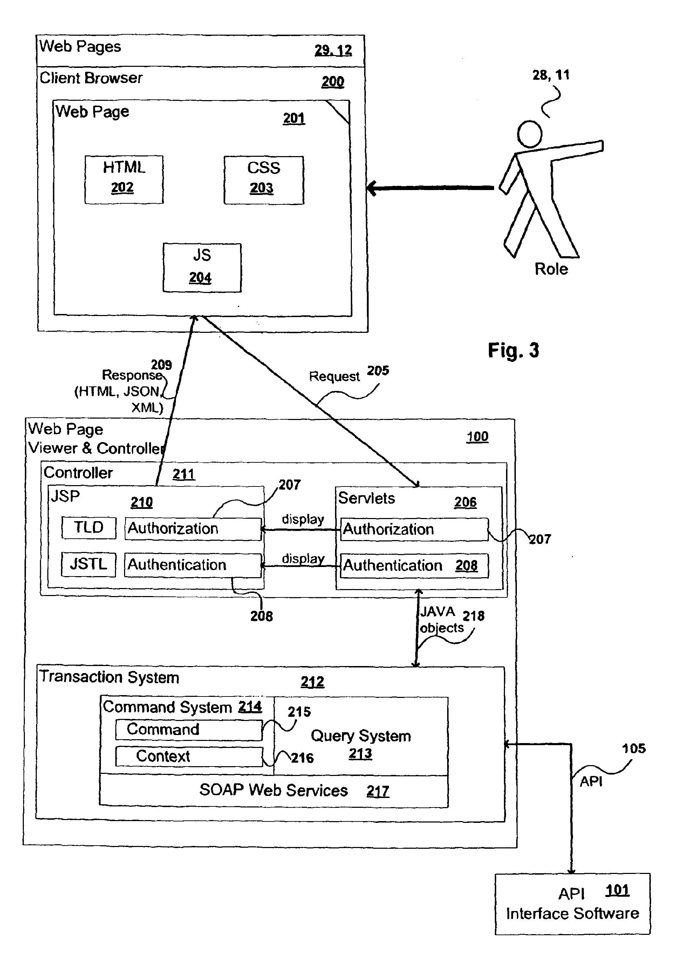

Referring to figure 3, Role 28, 11 accesses a Web Page 29, 12 in a Browser 200. The Web Page 201 is built using standard web technologies HTML (Hyper Text Markup Language) 202, CSS (Cascading Style Sheets) 203 and JS (Javascript) 204. Web Page Requests (205) are sent to JEE (Java Platform Enterprise Edition) Servlets 206. The Servlets 206 manage the Authorization 207 and Authentication 208 of the User in the Role 28, 11.

Requests 205 are processed and responses 209 are returned in the form of:
- JSPs (Java Server Page) 210 processed in the Controller 211 and returned as HTML. The JSP 210 displays the result of the Authentication 208 and Authorization 207.
- JSON (Javascript Object Notation)
- XML (eXtensible Markup Language)

Requests 205 that require query or manipulation of data go to the Transaction System 212 which is broken up into two parts, the Query System 213 and the Command System 214.

The Query System 213 is an abstraction on top of Web Services 217 (implemented using SOAP, Simple Object Access Protocol) which returns Java Objects 218 representing Model Data, for example Users. It uses the API 105 to the API Interface Software 101 to get the information to put into the Java Objects 218.

The Command System 214 uses Web Services 217 through API 105 to the API Interface Software 101 to execute the commands. PBX's traditionally do not support roll backs. Since this system bundles a group of commands together to make it easier on the Role 28, 11 to create something, for example a User in the PBX (which needs for example an extension a voicemail box and a DID number), if all the operations do not complete, the operations need to be undone since the role expects the user to have been provisioned with everything. Commands 215 implement an "execute and rollback" method. Commands that must execute together are run in a command context 216 which rolls back all previously executed commands if any one command fails.

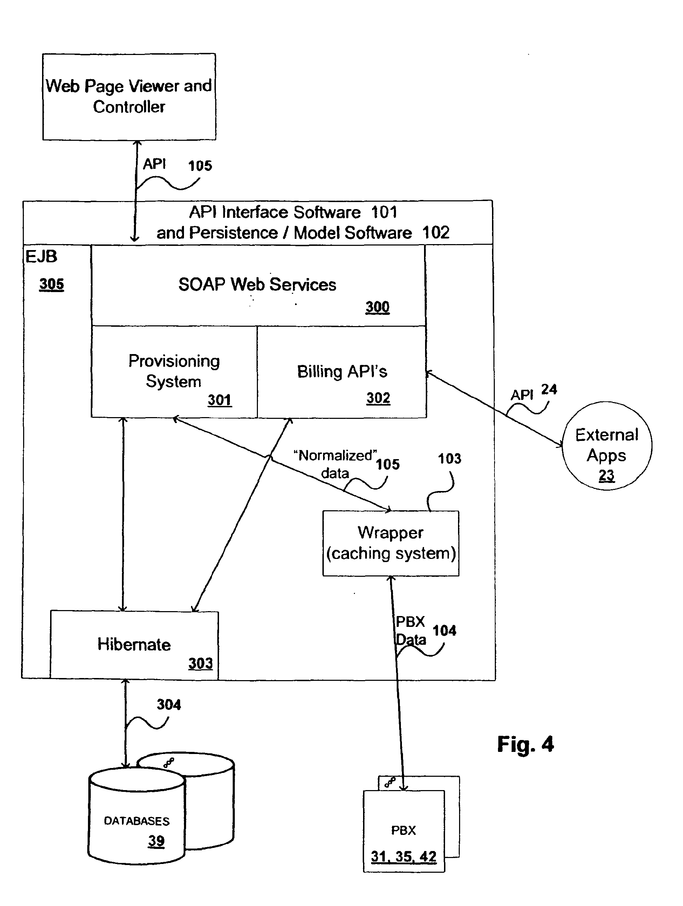

Referring to Figure 4, the EJBs (Enterprise Java Beans) 305 sit on top of Hibernate 303, which is an open source object (relational) mapping library for the Java language that provides persistent classes and logic without caring how to handle the data. They manage the database transactions such that if the transaction fails, the database rolls back any changes made during that transaction.

Web Services 300, are EJB 305 calls exposed as SOAP web services. Web Services 300 are divided into 2 groups, Provisioning Web Services 301 and Billing Web Services 302.

Provisioning Web Services 301 provide access to information on Users, Bundles,' Extensions, etc. by interfacing with the PBXs 31, 35, 42 to get PBX Data 104 through a Wrapper (Caching System) 103 which can translate the requests to and from the different PBX 'languages' to create "Normalized" Data 105. Billing API's 302 provide access to External Apps 23, via API 24 to retrieve information from the Databases 39.

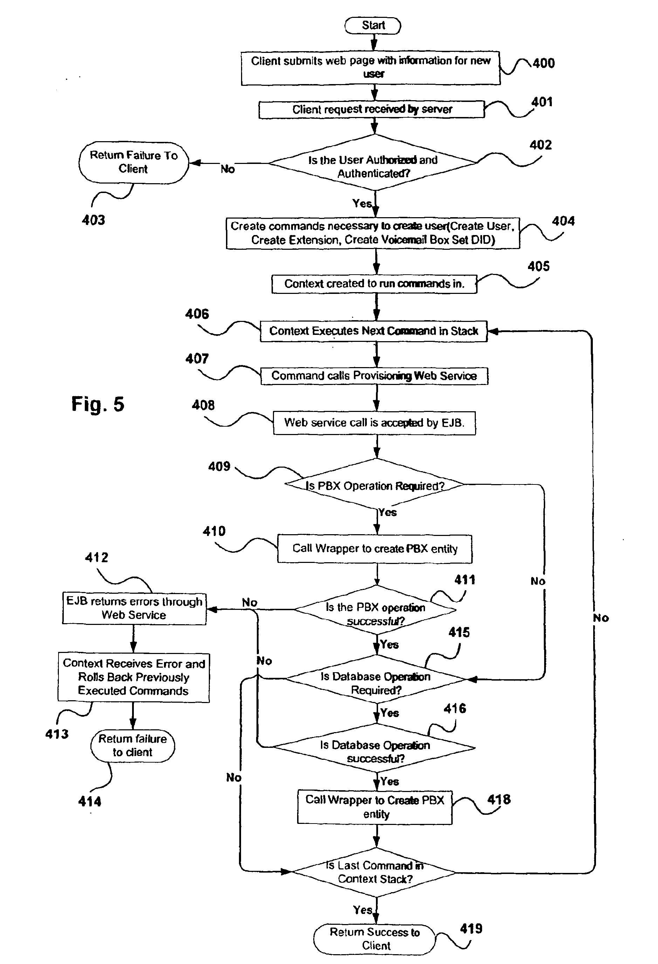

Figure 5 is a flow chart which explains the process that a person in a Role 28, 11 would go through to add a new User to a PBX 31, 35, 42 for a given Customer 10, 32, 33, 34. Web Pages are used to create the information for the new User which is Box 400 in Figure 5.

Using the diagram for Figure 3 as a base, Box 401 the client in a Role 28, 11 submits the information for the new User 400 from the Browser 200 through the Web Page 201. This is then sent via a Request 205 to the Web Page Viewer and Controller 100 Servlets 206.

Box 402, the Servlet goes through the Query System 213 and uses the API interface Software 101 to check the Database 39 to make sure the client is allowed to add a new User.

If not a failure is returned to the client (Box 403) as a Response 209 to the Web Page 201.

If it is successful, Box 404, the data for the new User is extracted, and the commands 215 to create a new user, create an extension, create a voicemail box, and assign a DID number are created.

Box 405, the Context 216 is then created to run the commands.

Box 406, the appropriate next command is executed.

Now using the diagram in Figure 4 as a base, Box 407, the command calls the Provisioning Web Service 301.

Box 408, the Web Service Call is accepted by the EJB 305.

Box 409 checks to see if a PBX Operation is required to fulfill the command.

If not, then it jumps to Box 415.

If so, Box 410, the Wrapper 103 is given the "normalized" data and it converts it into the correct command to send to the PBX(s) 31, 35, 42 via PBX data 104.

If the operation is not successful, Box 412, the EJB 305 returns an error through the Web Service 300.

Box 413, referring back to Figure 3, the Context 216 receives the error and rolls back the previously executed commands.

Box 414 a Response 209 is sent back to the client via the Web Page 201.

In Box 411, if the PBX operation was successful, then Box 415, it checks to see if a Database Operation is needed. If not it jumps to Box 418.

If yes, Box 416, referring to the diagram in Figure 4, the Provisioning System 301 then uses Hibernate 303 to interact with the Database 39.

Box 416, if the operation is not successful, then it goes to Box 412, etc. which is described above.

If it is successful, Box 417, is the same as Box 410, the Wrapper 103 is given the "normalized" data and it converts it into the correct command to send to the PBX via PBX data 104.

Box 418, it checks to see if this is the last command, and if not, it goes to Box 406 and does it again.

If it is the last command then, Box 419, it returns Success to the client via the Web Page.

The described portal application offers many advantages, some of which may include:
- Grouping of different (physical and manufacturer) PBX's into one 'virtual' PBX from a customer's perspective, or having many customers use one instance of a PBX.
- An automated provisioning process which hides complex programming from the end User, and communication devices (soft phone, hard phone, cell phone, conference unit, etc.).
- Grouping PBX and application features and dialing restrictions (Class of Service/Class of Restriction) into named profiles (so that for one thing, the individual PBX feature names which could be different, are hidden) that can be assigned to bundles
- Easy to use management interfaces for every role
- Subscriber self-service
- Automatic provisioning of voice mail, auto attendant
- Easy provisioning of groups (Hunt, Pickup and Ring) adding users from multiple PBX's
- Security
- Contextual roles (policy and hardware based)
- Grouping of Customers into Reseller managed groups
- Seamless management of multiple Customers and Users over geographically distributed sites
- Geographical redundancy
- Self-managed contextual based call routing
- Reverse lookup for 'grouped' items (e.g what trunk groups does this trunk belong to)
- Easy provisioning of call center groups and agents
- Customer virtualization
- APIs to extend database information to other systems
- Pushing advertising
- Management of Service Provider and Customer resources (DID's for now)
- Mass configuration of users
- A default database, provisioned either manually, or through an automated system, for all PBX's which ensures consistent configuration across each PBX, and a standard set of services available through the portal
- Providing the ability to the Service Provider to offer virtual services (for example a receptionist group, or dispatcher) to different customers
- Providing the ability to the Service Provider to create "packages" for a customer which could include restrictions and features, which is then 'pushed' to users automatically, without having to set it up for each user.
- The portal can be fitted to different vertical markets, which could vary on the equipment used, the language used, the amenities involved, etc.
- Providing the ability for a Service Provider to plug in different modules to handle provisioning of something, for example a phone. A Service Provider Customer User could pick the phone they want (offered to them based on the role or bundle), and the system can take that choice and do all the background work necessary to get that user the phone, from buying it, invoicing the customer, shipping it, etc.
- The portal can also provide the ability for a Customer to set up a Room rather than a User, with resources (like a phone, conference unit, etc.)
- Branding (white labeling), the look and feel of the web site can be customized based on the context of use (which user, customer, language), and can be accessed, modified and deleted
- Providing granularity of versions and features to different Service Provider Customers and Resellers.

## Claims

1. An application server (25) for provisioning one or more controlled communication systems hosted on a server (16) in a network environment through a portal application (17), wherein said controlled communication system is provisioned in response to data input in a particular language, the application server comprising:
a viewer-and-controller module (100) for presenting either a GUI or an API to a client containing fields for accepting client input pertaining to the controlled communication system provisioning requirements;
an API interface module (101) for communicating with the controlled communication system including a wrapper module (103) for translating between normalized data for use by the viewer-and-controller module (100) and data in the particular communication system language for any controlled communication system and a provisioning module (301) for communicating with said wrapper module (103); and
wherein said viewer-and controller-module (100) further comprises a controller module (211) for generating said GUI or said API, and a transaction module (212) responsive to a client input to query said API interface module (101) to obtain data required to implement user provisioning requests in the viewer-and-controller module (100) to create a new or modified user profile or a room profile that is provisioned as a user profile; and
said transaction module (212) further including a command module (214) for sending commands as normalized data to the provisioning module (301) to implement said new or modified user profile in said one or more controlled communication systems via said wrapper module (103).

2. An application server as claimed in claim 1, wherein the communication system comprises a PBX (31, 35, 42).

3. An application server as claimed in claim 1 or 2, wherein said transaction module further includes a context module (216) for sending commands as normalized data to said API application interface module to roll back previous commands in the event of a failure to implement a new or modified user profile within a controlled communication system.

4. An application server as claimed in any one of claims 1 to 3, wherein said viewer and controller module is configured to pack communications system forms together such that a high level services room/user creation form or API is presented.

5. An application server as claimed in claim 4, wherein said high level services include naming and packaging Classes of Service.

6. An application server as claimed in claim 4, wherein said high level services include naming and packaging Classes of Restriction.

7. An application server as claimed in any one of claims 4 to 6, wherein said communications systems forms are selected from a group consisting of: a number of extension creation forms, a form for grouping all user/room extensions together to create a twinning ring group, a form for configuring voicemail for the user/room, and a form for setting up routing of the extensions to voicemail, a form for setting up routing of a user belonging to a specific company to voicemail, a form for setting up routing of a user belonging to a specific company to voicemail based on a unique pre-pending id to the user's extensions, a form for configuring Class of Restriction, and a form for configuring Class of Service.

8. An application server as claimed in any one of claims 1 to 7, wherein said GUI is a customizable web page generated by said viewer-and-controller module and accessible in a browser.

9. An application server as claimed in any one of claims 1 to 8, wherein said transaction module is configured to exchange data with the API interface module using web services such as SOAP services, for instance Enterprise Java Beans calls.

10. An application server as claimed in any one of claims 1 to 9, wherein said controller module includes an authentication and authorization module, for instance Java servlets, for checking client validity and access rights

11. An application server as claimed in any one of claims 1 to 10, wherein the API interface module includes a billing API for interfacing with external applications such as external CRM applications and external provisioning applications.

12. An application server as claimed in any one of claims 1 to 5, wherein said API interface module includes a data storage module communicating with said provisioning module and interacting with databases storing customer information, and optionally wherein said data storage module interacts with multiple databases storing customer information for different customers.

13. An application server as claimed in any one of claims 1 to 12, wherein the portal application communicates with remote servers hosting virtual PBX applications via a WAN or LAN.

14. A computer-implemented method of provisioning one or more controlled communications systems hosted on a server in a network environment through a portal application (27), wherein said controlled communications systems are provisioned in response to data input in a particular language, the method comprising:
presenting a graphical user interface or an API to a client containing fields for accepting client input pertaining to PBX provisioning requirements ;
establishing communication with the controlled communications systems through a wrapper module (103) that translates between normalized data for use by a viewer-and- controller module (100) and data in the particular PBX language for any controlled communications system; and
responding to a client input to query an API interface module (101) to obtain data required to implement user provisioning requests to create a new or modified user profile or a room profile that is provisioned as a user profile; and
sending commands as normalized data to the wrapper module (103) to implement said new or modified user profile in said one or more communications systems.

15. A computer program comprising machine readable instructions that when executed by a computing apparatus controls it to perform the method of claim 14.

## Patentansprüche

1. Anwendungsserver (25) zum Bereitstellen von einem oder mehreren in einem Server (16) in einer Netzwerkumgebung gehosteten gesteuerten Kommunikationssystemen durch eine Portalanwendung (17), wobei das genannte gesteuerte Kommunikationssystem als Reaktion auf in einer bestimmten Sprache eingegebene Daten bereitgestellt wird, wobei der Anwendungsserver Folgendes aufweist:
ein Betrachter-und-Controller-Modul (100) zum Präsentieren, einem Client, einer GUI oder einer API, die Felder zum Akzeptieren von Client-Eingaben betreffend den Bereitstellungsanforderungen des gesteuerten Kommunikationssystems enthält,
ein API-Schnittstellenmodul (101) zur Kommunikation mit dem gesteuerten Kommunikationssystem, das ein Wrapper-Modul (102) zum Übersetzen zwischen normalisierten Daten zur Verwendung durch das Betrachter-und-Controller-Modul (100) und Daten in der jeweiligen Kommunikationssystemsprache für ein beliebiges gesteuertes Kommunikationssystem und ein Bereitstellungsmodul (301) zur Kommunikation mit dem genannten Wrapper-Modul (103) beinhaltet, und
wobei das genannte Betrachter-und-Controller-Modul (100) ferner ein Controller-Modul (211) zum Generieren der genannten GUI oder der genannten API und ein Transaktionsmodul (212) aufweist, das auf eine Client-Eingabe reagiert, um das genannte API-Schnittstellenmodul (101) abzufragen zum Erhalten von zur Implementierung von Benutzerbereitstellungsanfragen im Betrachter-und-Controller-Modul (100) erforderlichen Daten, um ein neues oder modifiziertes Benutzerprofil oder ein Raumprofil, das als ein Benutzerprofil bereitgestellt wird, zu erstellen, und
das genannte Transaktionsmodul (212) ferner ein Befehlsmodul (214) zum Senden von Befehlen als normalisierte Daten an das Bereitstellungsmodul (301) zum Implementieren des genannten neuen oder modifizierten Benutzerprofils in dem/den genannten einen oder mehreren gesteuerten Kommunikationssystem(en) über das genannte Wrapper-Modul (103) beinhaltet.

2. Anwendungsserver nach Anspruch 1, wobei das Kommunikationssystem eine Telefonanlage (31, 35, 42) ist.

3. Anwendungsserver nach Anspruch 1 oder 2, wobei das genannte Transaktionsmodul ferner ein Kontextmodul (216) zum Senden von Befehlen als normalisierte Daten an das genannte API-Anwendungsschnittstellenmodul beinhaltet, um im Fall einer Nichtimplementierung eines neuen oder modifizierten Benutzerprofils in einem gesteuerten Kommunikationssystem vorherige Befehle rückgängig zu machen.

4. Anwendungsserver nach einem der Ansprüche 1 bis 3, wobei das genannte Betrachter-und-Controller-Modul konfiguriert ist, Kommunikationssystemformulare zusammenzupacken, so dass ein(e) Raum-/Benutzererstellungsformular oder -API für hochrangige Dienste präsentiert wird.

5. Anwendungsserver nach Anspruch 4, wobei die genannten hochrangigen Dienste die Benennung und Paketierung von Serviceklassen beinhalten.

6. Anwendungsserver nach Anspruch 4, wobei die genannten hochrangigen Dienste die Benennung und Paketierung von Einschränkungsklassen beinhalten.

7. Anwendungsserver nach einem der Ansprüche 4 bis 6, wobei die genannten Kommunikationssystemformulare aus einer Gruppe bestehend aus einer Anzahl von Nebenstellenerstellungsformularen, einem Formular zum Gruppieren aller Benutzer-/Raumnebenstellen zusammen, um eine Twinning-Ruf-Gruppe zu bilden, einem Formular zum Konfigurieren eines Sprachspeicherdiensts für den Benutzer/Raum und einem Formular zum Einrichten des Routings der Nebenstellen zum Sprachspeicherdienst, einem Formular zum Einstellen des Routings eines zu einer spezifischen Gesellschaft gehörenden Benutzers zum Sprachspeicherdienst, einem Formular zum Einstellen des Routings eines zu einer spezifischen Gesellschaft gehörenden Benutzers zum Sprachspeicherdienst auf Basis einer eindeutigen vorangestellten Kennung zu den Nebenstellen des Benutzers, einem Formular zum Konfigurieren der Einschränkungsklasse und einem Formular zum Konfigurieren der Serviceklasse ausgewählt werden.

8. Anwendungsserver nach einem der Ansprüche 1 bis 7, wobei die genannte GUI eine individuell anpassbare Internetseite ist, die von dem genannten Betrachter- und-Controller-Modul generiert wird und in einem Browser aufrufbar ist.

9. Anwendungsserver nach einem der Ansprüche 1 bis 8, wobei das genannte Transaktionsmodul konfiguriert ist, unter Verwendung von Webdiensten wie SOAP-Diensten, z.B. Enterprise Java Beans-Anrufen, Daten mit dem API-Schnittstellenmodul auszutauschen.

10. Anwendungsserver nach einem der Ansprüche 1 bis 9, wobei das genannte Controller-Modul ein Authentifizierungs- und Autorisierungsmodul, z.B. Java-Servlets, zur Überprüfung der Gültigkeit und Zugriffsrechte von Clients beinhaltet.

11. Anwendungsserver nach einem der Ansprüche 1 bis 10, wobei das API-Schnittstellenmodul eine Billing-API zur Anbindung an externe Anwendungen wie externe CRM-Anwendungen und externe Bereitstellungsanwendungen beinhaltet.

12. Anwendungsserver nach einem der Ansprüche 1 bis 5, wobei das genannte API-Schnittstellenmodul ein Datenspeichermodul beinhaltet, das mit dem genannten Bereitstellungsmodul kommuniziert und mit Kundeninformationen speichernden Datenbanken interagiert, und wobei das genannte Datenspeichermodul fakultativ mit mehreren Datenbanken, die Kundeninformationen für verschiedene Kunden speichern, interagiert.

13. Anwendungsserver nach einem der Ansprüche 1 bis 12, wobei die Portalanwendung über ein WAN oder LAN mit entfernten Servern, die virtuelle Telefonanlagenanwendungen hosten, kommuniziert.

14. Rechnerimplementiertes Verfahren zum Bereitstellen von einem oder mehreren in einem Server in einer Netzwerkumgebung gehosteten gesteuerten Kommunikationssystem(en) durch eine Portalanwendung (27), wobei die genannten gesteuerten Kommunikationssysteme als Reaktion auf in einer bestimmten Sprache eingegebene Daten bereitgestellt werden, wobei das Verfahren Folgendes aufweist:
Präsentieren, einem Client, einer grafischen Benutzeroberfläche oder einer API, die Felder zum Akzeptieren von Client-Eingaben betreffend Telefonanlagen-Bereitstellungsanforderungen enthält,
Herstellen der Kommunikation mit den gesteuerten Kommunikationssystemen durch ein Wrapper-Modul (103), das zwischen normalisierten Daten zur Verwendung durch ein Betrachter-und-Controller-Modul (100) und Daten in der jeweiligen Telefonanlagensprache für ein beliebiges gesteuertes Kommunikationssystem übersetzt, und
Reagieren auf eine Client-Eingabe zum Abfragen eines API-Schnittstellenmoduls (101) zum Erhalten von zur Implementierung von Benutzerbereitstellungsanfragen erforderlichen Daten, um ein neues oder modifiziertes Benutzerprofil oder ein Raumprofil, das als ein Benutzerprofil bereitgestellt wird, zu erstellen, und
Senden von Befehlen als normalisierte Daten an das Wrapper-Modul (103) zum Implementieren des genannten neuen oder modifizierten Benutzerprofils in dem/den genannten einen oder mehreren Kommunikationssystem(en).

15. Computerprogramm, umfassend maschinenlesbare Anweisungen, die bei Ausführung durch einer Rechenvorrichtung sie zur Durchführung des Verfahrens von Anspruch 14 steuert.

## Revendications

1. Serveur d'application (25) pour approvisionner un ou plusieurs systèmes de communication commandés hébergés sur un serveur (16) dans un environnement de réseau par le biais d'une application de portail (17), ledit système de communication commandé étant approvisionné en réponse à une entrée de données dans un langage particulier, le serveur d'application comprenant :
un module de visualisation et de commande (100) pour présenter à un client soit une GUI, soit une API contenant des champs pour accepter une entrée client relative aux exigences d'approvisionnement de système de communication commandé ;
un module d'interface API (101) pour communiquer avec le système de communication commandé comportant un module d'enveloppement (103) pour traduire entre des données normalisées destinées à être utilisées par le module de visualisation et de commande (100) et des données dans le langage de système de communication particulier pour n'importe quel système de communication commandé, et un module d'approvisionnement (301) pour communiquer avec ledit module d'enveloppement (103) ; et
dans lequel ledit module de visualisation et de commande (100) comprend en outre un module de commande (211) pour générer ladite GUI ou ladite API, et un module de transaction (212) en réponse à une entrée client pour interroger ledit module d'interface API (101) afin d'obtenir des données requises pour mettre en oeuvre des requêtes d'approvisionnement utilisateur dans le module de visualisation et de commande (100) pour créer un profil utilisateur nouveau ou modifié ou un profil de salle qui est approvisionné en tant que profil utilisateur ; et
ledit module de transaction (212) comportant en outre un module de commande (214) pour envoyer des commandes comme données normalisées au module d'approvisionnement (301) pour mettre en oeuvre ledit profil utilisateur nouveau ou modifié dans lesdits un ou plusieurs systèmes de communication commandés par l'intermédiaire dudit module d'enveloppement (103).

2. Serveur d'application selon la revendication 1, dans lequel le système de communication comprend un PBX (31, 35, 42).

3. Serveur d'application selon la revendication 1 ou 2, dans lequel ledit module de transaction comporte en outre un module de contexte (216) pour envoyer des commandes comme données normalisées audit module d'interface d'application API pour répéter des commandes antérieures en cas de défaillance de mise en oeuvre d'un profil utilisateur nouveau ou modifié dans un système de communication commandé.

4. Serveur d'application selon l'une quelconque des revendications 1 à 3, dans lequel ledit module de visualisation et de commande est configuré pour grouper ensemble des formulaires de systèmes de communication de telle sorte qu'un formulaire de création de salle/d'utilisateur de services de haut niveau ou API soit présenté.

5. Serveur d'application selon la revendication 4, dans lequel lesdits services de haut niveau comportent l'appellation ou la présentation de Classes de Service.

6. Serveur d'application selon la revendication 4, dans lequel lesdits services de haut niveau comportent l'appellation ou la présentation de Classes de Restriction.

7. Serveur d'application selon l'une quelconque des revendications 4 à 6, dans lequel lesdits formulaires de systèmes de communication sont sélectionnés dans un groupe consistant en : un nombre de formulaires de création d'extension, un formulaire pour grouper ensemble tous les postes d'utilisateur/de salle pour créer un groupe d'appel jumelé, un formulaire pour configurer une messagerie vocale pour l'utilisateur/la salle, et un formulaire pour établir un routage des postes vers la messagerie vocale, un formulaire pour établir un routage d'un utilisateur appartenant à une société spécifique vers une messagerie vocale, un formulaire pour établir un routage d'un utilisateur appartenant à une société spécifique vers une messagerie vocale en fonction d'un identifiant de préfixe unique vers les postes de l'utilisateur, un formulaire pour configurer une Classe de Restriction, et un formulaire pour configurer une Classe de Service.

8. Serveur d'application selon l'une quelconque des revendications 1 à 7, dans lequel ladite GUI est une page Web personnalisable générée par ledit module de visualisation et de commande et accessible dans un navigateur.

9. Serveur d'application selon l'une quelconque des revendications 1 à 8, dans lequel ledit module de transaction est configuré pour échanger des données avec le module d'interface API en utilisant des services Web tels que des services SOAP, par exemple des appels Enterprise Java Beans.

10. Serveur d'application selon l'une quelconque des revendications 1 à 9, dans lequel ledit module de commande comporte un module d'authentification et d'autorisation, par exemple de servlets Java, servant à vérifier la validité et les droits d'accès des clients.

11. Serveur d'application selon l'une quelconque des revendications 1 à 10, dans lequel le module d'interface API comporte une API de facturation pour l'interfaçage avec des applications externes telles que des applications CRM externes et des applications d'approvisionnement externes.

12. Serveur d'application selon l'une quelconque des revendications 1 à 5, dans lequel ledit module d'interface API comporte un module de stockage de données qui communique avec ledit module d'approvisionnement et interagit avec des bases de données qui renferment des informations clients, et facultativement dans lequel ledit module de stockage de données interagit avec de multiples bases de données qui renferment des informations clients pour des clients différents.

13. Serveur d'application selon l'une quelconque des revendications 1 à 12, dans lequel l'application de portail communique avec des serveurs distants hébergeant des applications PBX virtuelles par l'intermédiaire d'un WAN ou d'un LAN.

14. Procédé mis en oeuvre par un ordinateur pour approvisionner un ou plusieurs systèmes de communication commandés hébergés sur un serveur dans un environnement de réseau par le biais d'une application de portail (27), lesdits systèmes de communication commandés étant approvisionnés en réponse à une entrée de données dans un langage particulier, le procédé comprenant :
la présentation à un client d'une interface utilisateur graphique ou d'une API contenant des champs pour accepter une entrée client relative aux exigences d'approvisionnement de PBX ;
l'établissement d'une communication avec les systèmes de communication commandés par le biais d'un module d'enveloppement (103) qui traduit des données normalisées destinées à être utilisées par un module de visualisation et de commande (100) et des données dans le langage de PBX particulier pour n'importe quel système de communication commandé ; et
la réponse à une entrée client pour interroger un module d'interface API (101) afin d'obtenir des données requises pour mettre en oeuvre des requêtes d'approvisionnement utilisateur et créer un profil utilisateur nouveau ou modifié ou un profil de salle qui est approvisionné en tant que profil utilisateur; et
l'envoi de commandes comme données normalisées au module d'enveloppement (103) pour mettre en oeuvre ledit profil utilisateur nouveau ou modifié dans lesdits un ou plusieurs systèmes de communication.

15. Programme informatique comprenant des instructions lisibles par machine qui, lorsqu'elles sont exécutées par un appareil informatique, commandent à celui-ci d'exécuter le procédé selon la revendication 14.
